# FASCICULE DE BREVET EUROPEEN

(11) **EP 2 350 621 B1**
(45) Date de publication et mention de la délivrance du brevet: **06.05.2015**
(21) Numéro de dépôt: 09768148.0
(22) Date de dépôt: 05.11.2009
(51) Int. Cl.: G01N 21/95, G01N 21/89

(54) **PROCEDE ET DISPOSITIF POUR INSPECTER DES SOUDURES D'EMBALLAGE**
VERFAHREN UND VORRICHTUNG ZUR INSPEKTION VON VERPACKUNGSVERSCHLÜSSEN
METHOD AND DEVICE FOR INSPECTING PACKAGING SEALS

(30) Priorité: 05.11.2008 FR 0857522
(43) Date de publication de la demande: 03.08.2011
(73) Titulaire: Luceo, 35770 Verne Sur Seiche (FR)
(72) Inventeur: PIROT, Eric, F-35510 Cesson-Sevigne (FR)
(74) Mandataire: Thibault, Jean-Marc
(86) Numéro de dépôt international: PCT/FR2009/052136
(87) Numéro de publication internationale: WO 2010/052431

(56) Documents cités:
- EP-A2- 1 790 975
- WO-A1-99/60381
- JP-A- 8 271 433
- JP-A- 2001 349 837
- US-A- 5 363 968
- US-A1- 2001 016 059
- US-A1- 2007 147 821
- US-A1- 2007 296 963
- US-B1- 6 746 864
- DATABASE INSPEC [Online] THE INSTITUTION OF ELECTRICAL ENGINEERS, STEVENAGE, GB; 1995, MCCLELLAN J: "Lighting and imaging for automated blister package inspection" XP002532491 Database accession no. 5164424

## Description

La présente invention concerne le domaine technique de l'inspection ou du contrôle optique d'emballages à travers une partie transparente ou translucide dudit emballage contenant des produits de différentes natures.

L'objet de l'invention trouve des applications particulièrement avantageuses mais non exclusivement, dans le domaine du contrôle des emballages de produits relevant du domaine agro-alimentaire, de la pharmacie ou de la cosmétique.

L'objet de l'invention vise plus précisément le contrôle de la qualité des soudures des emballages tels que par exemple des emballages thermoscellés.

Dans le domaine des emballages thermoscellés, chaque emballage comporte au moins une alvéole de réception du produit conditionné. Chaque alvéole est fermée par un film qui est soudé sur l'alvéole. La zone de jonction entre le film et l'alvéole correspond à la soudure qui entoure l'alvéole en étant située généralement au bord de l'alvéole. Après le conditionnement des produits, il apparaît le besoin d'assurer le contrôle de la qualité de soudage. L'inspection des soudures permet de détecter par exemple la présence de bulles ou la présence d'intrus ou de corps étrangers. La présence d'intrus dans les soudures thermoscellées conduit à une altération d'une part de la qualité de la soudure du point de vue de l'étanchéité et, d'autre part de l'aspect esthétique conféré au produit et à l'emballage.

L'inspection des soudures des emballages pose un problème spécifique notamment lorsque l'observation doit être effectuée du côté de l'alvéole qui est à même de créer une zone d'occultation pour les soudures à contrôler. Tel est le cas notamment lorsque le film de fermeture est opaque et nécessite l'inspection des soudures à partir du côté où s'étend l'alvéole. Il apparaît ainsi en fonction de la hauteur de l'emballage et de la position des soudures, qu'au moins une partie des soudures à observer peut être masquée par le fond de l'alvéole.

Pour tenter de remédier à ce problème, il a été proposé d'utiliser plusieurs caméras d'inspection. Ainsi, dans le cas d'un emballage comportant une alvéole, il a été proposé d'utiliser deux caméras inspectant chacune les soudures s'établissant selon un demi-côté de l'emballage. Dans le cas de l'inspection d'un emballage à double alvéoles ou de deux emballages placés côte à côte, il a été envisagé d'utiliser trois caméras montées côte à côte. L'inconvénient de cette solution concerne l'utilisation de plusieurs caméras et la nécessité de traiter et de paramétrer plusieurs images, ce qui est pénalisant en termes de temps de calcul et de traitement. Cette solution nécessite de s'assurer d'un bon recouvrement entre chaque image afin d'éviter que des zones de la soudure ne soient pas contrôlées. Une difficulté supplémentaire apparaît dans le traitement des défauts situés dans la zone de recouvrement commune à deux caméras. Si l'utilisation de plusieurs caméras côte à côte permet de s'affranchir de la géométrie de la barquette suivant un axe perpendiculaire à l'axe de défilement des emballages, cette solution nécessite de déclencher de façon synchrone les acquisitions des caméras pour s'affranchir de la géométrie suivant l'axe de défilement de l'emballage.

Pour remédier aux inconvénients liés à l'utilisation de plusieurs caméras, la demande de brevet EP 1 790 975 prévoit d'utiliser une caméra linéaire équipée d'un objectif conventionnel et d'au moins un couple de miroirs positionnés de part et d'autre de l'emballage, dans un plan latéral perpendiculaire à l'axe de défilement des emballages. Dans cette solution, le champ de prise de vues de la caméra est décomposé en deux ou trois champs de prise de vues partielles.

Il doit tout d'abord être noté que l'utilisation de miroirs nécessite des réglages précis de ces derniers en orientation autour de l'axe de défilement pour s'assurer d'un recouvrement correct entre les champs de prise de vues partielles suivant un axe transversal par rapport à l'axe de défilement ainsi qu'en orientation autour de l'axe vertical pour s'assurer de l'absence de décalage entre les champs de prise de vues partielles suivant l'axe de défilement. Par ailleurs, la décomposition en plusieurs champs de prise de vues partielles implique que le nombre de pixels utiles de la caméra est inférieur au nombre total de pixels de la caméra. Il s'ensuit que la résolution obtenue est donc dégradée par rapport à la pleine résolution de la caméra. Par ailleurs, la décomposition en plusieurs champs partiels implique une zone de recouvrement à gérer. En particulier, les variations de la position latérale de la barquette par rapport à la zone de recouvrement entraînent des variations de la taille des zones inspectées à appliquer à chaque champ partiel. Dans le même sens, la position angulaire de la barquette relativement à l'axe de défilement peut entraîner l'impossibilité d'inspecteur certaines zones de la soudure. De plus, il est à noter que la présence de miroirs à proximité immédiate de l'emballage limite les possibilités pour positionner les éclairages. Enfin, cette solution n'est pas adaptée pour contrôler un emballage comportant plusieurs alvéoles ou pour plusieurs emballages situés côte à côte dans la mesure où cette solution ne permet pas de contrôler les soudures des alvéoles situées à l'opposé des miroirs.

Il est à noter qu'il est connu dans le domaine du contrôle de la fluorescence émise par des échantillons biologiques dans des fioles, le document WO 99/60381 qui décrit un dispositif de contrôle comportant une source lumineuse et un système optique télécentrique disposé entre les échantillons et un détecteur. De même, dans le domaine de l'inspection d'une surface spéculaire, le document US 2007/147821 décrit un dispositif optique comportant une caméra, des sources lumineuses et une lentille de champ asphérique. La lentille de champ constitue avec la lentille de la caméra, un système d'imagerie télécentrique dans lequel la lentille est positionnée dans le plan focal optique de la lentille. Il doit être noté que les dispositifs décrits par ces deux documents ne sont pas adaptés pour inspecter les soudures d'emballage.

L'objet de l'invention vise donc à remédier aux inconvénients de la technique antérieure en proposant un procédé et un dispositif pour inspecter les soudures d'emballage, de conception simple, peu coûteux et à caractère universel pour permettre d'inspecter divers formats ou formes d'emballages sans entraîner de réglages spécifiques.

Un autre objet de l'invention est de proposer un procédé et un dispositif d'inspection permettant de contrôler à l'aide d'une caméra unique, un emballage présentant plusieurs alvéoles ou une série d'emballages placés côte à côte.

Pour atteindre de tels objectifs, l'objet de l'invention concerne un procédé pour inspecter sur une largeur de contrôle, des soudures d'emballages, défilant devant un dispositif d'inspection optique comportant une caméra munie d'un objectif et au moins une source lumineuse d'éclairage des soudures.

Selon l'invention, le procédé consiste à interposer un système optique frontal de distance focale positive, couvrant au moins toute la largeur de contrôle des emballages, entre l'objectif de la caméra et les emballages de manière que la distance entre ledit système optique frontal et l'emballage soit strictement inférieure à la distance focale dudit système optique frontal, et à prendre des images des soudures afin de déceler la présence de défauts.

Selon une autre caractéristique de l'invention, la distance entre l'objectif de la caméra et le système optique frontal est égale sensiblement à la distance focale dudit système optique frontal.

Un autre objet de l'invention est de proposer un poste d'inspection sur une largeur de contrôle des soudures d'emballages selon la revendication annexée.

L'objet de l'invention comporte en outre l'une et/ou l'autre des caractéristiques additionnelles suivantes :
- le système optique frontal comporte au moins une ou une unique lentille de Fresnel de distance focale positive,
- l'objectif de la caméra possède une distance focale Fo qui, en combinaison avec la distance focale Ff du système optique frontal, permet de couvrir la largeur de contrôle par le champ de la caméra,
- la source lumineuse est située du même coté des emballages que la caméra ou du côté opposé à la caméra par rapport aux emballages,
- la source lumineuse possède un spectre centré sur une longueur d'onde qui augmente dans limage obtenue par la caméra, le contraste d'un intrus potentiel dans les soudures,
- la source lumineuse possède un spectre centré sur une longueur d'onde à laquelle les emballages sont transparents,
- la source lumineuse possède un spectre dans le domaine des infrarouges ou proche infrarouge compris entre 0,78 et 3 µm,
- la source lumineuse possède un spectre étroit de largeur à mi-hauteur inférieure à 30 nm,
- la source lumineuse présente un spectre large, un filtre basse bande sélectionnant le spectre étroit étant interposé entre l'emballage et la caméra ou entre la source lumineuse et l'emballage,
- le poste comporte sur le chemin optique situé entre l'objectif de la caméra et le système optique frontal, un miroir plan,
- le poste comporte d'une part un filtre de polarisation de la lumière de la source lumineuse et, d'autre part un analyseur de la lumière polarisée placé entre l'emballage et la caméra et orienté en fonction de la polarisation de la lumière,
- le dispositif d'inspection comporte une largeur de contrôle correspondant à une largeur du convoyeur adaptée pour recevoir côte à côte, une série d'emballages à contrôler, le dispositif d'inspection comportant une unique caméra d'inspection des emballages occupant la largeur de contrôle,
- le poste d'inspection comporte des moyens de réglage de la distance entre les emballages et le dispositif d'inspection.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique illustrant la mise en oeuvre d'un dispositif d'inspection conforme à l'invention.

La **Figure 2** est une vue prise sensiblement selon les lignes II-II de la **Fig. 1** montrant le principe du dispositif d'inspection conforme à l'invention.

La **Figure 3** illustre un autre exemple d'application d'un dispositif d'inspection conforme à l'invention.

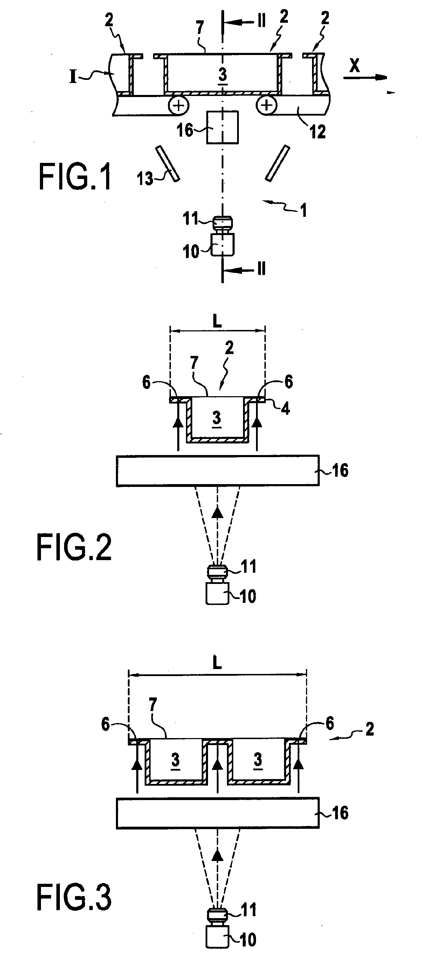

Tel que cela ressort plus précisément de la **Fig. 1**, l'objet de l'invention concerne un procédé et un dispositif d'inspection optique **1** adapté pour assurer un contrôle ou une inspection optique pour les soudures d'emballages **2** de produits conditionnés, sur une ligne de conditionnement **I** de tout type connu en soi. Les produits emballés peuvent relever, par exemple, du domaine agro-alimentaire, pharmaceutique, ophtalmique ou cosmétique. L'emballage **2** présente toute forme appropriée et se trouve réalisé en un matériau permettant une inspection par prise d'images. A cet égard, l'emballage **2** comporte au moins un côté transparent à travers lequel est réalisée l'inspection optique associé à un côté opposé transparent ou opaque. Bien entendu, le caractère transparent de l'emballage est à considérer par rapport au spectre de la lumière utilisée pour l'inspection optique.

Chaque emballage **2** comporte au moins une alvéole **3** de réception du produit à conditionner. Cet emballage **2** ou barquette comporte généralement (comme illustré dans l'exemple de la **Fig. 1**), un rebord **4** bordant la périphérie de chaque alvéole **3** sur lequel est fixé par des soudures **6**, un film de fermeture **7**. L'alvéole **3** est donc obturée par le film de fermeture **7** dans des zones de jonction dans lesquelles sont réalisées les soudures **6**.

Les soudures **6** des emballages **2** sont contrôlées à l'aide du dispositif d'inspection optique **1** conforme à l'invention faisant partie d'un poste de contrôle ou d'inspection placé sur la ligne de conditionnement **I** mettant en oeuvre une machine operculeuse ou de préférence une machine thermoformeuse. Le poste d'inspection selon l'invention comporte donc le dispositif d'inspection optique **1**, les moyens assurant l'amenée des emballages successivement à ce poste d'inspection et les emballages placés temporairement à ce poste d'inspection.

Le poste d'inspection ou de contrôle selon l'invention est rapporté ou intégré à une machine thermoformeuse adaptée pour assurer le thermoscellage d'emballages de produits divers tels que des produits de charcuterie, de fromagerie ou de traiteur. Ce poste d'inspection ou de contrôle est placé en aval d'un poste de remplissage des emballages par les produits et d'un poste de thermoscellage et en amont d'un poste de tri des emballages en fonction du respect ou non de critères de qualité ou de conformité. Bien entendu, le poste d'inspection des soudures selon l'invention peut être associé à divers autres postes tels que des postes de marquage, d'impression ou de contrôle optique ou non pour les produits et/ou les emballages.

Le dispositif d'inspection **1** selon l'invention comporte une seule caméra **10** pourvue d'un objectif **11** permettant de prendre des images des soudures **6** des emballages **2** afin de déceler la présence de défauts tels que des bulles, d'intrus ou de corps étrangers dans ces soudures **6**. De manière classique, la qualité des soudures **6** est contrôlée à partir du côté des emballages à partir duquel s'étend l'alvéole à savoir le côté alvéole dans la mesure où l'alvéole **3** présente dans la zone de jonction avec le film **7** (soudure **6**), un caractère transparent, le film **7** présentant un caractère opaque ou transparent. Dans la variante de réalisation illustrée sur les dessins, les emballages **2** sont convoyés sur la ligne de conditionnement **I** selon le sens de déplacement **X** à l'aide d'un convoyeur **12**, avec le côté film dirigé vers le haut et le côté alvéole dirigé vers le bas. Dans cet exemple de réalisation, la caméra **10** est placée en dessous des emballages **2** de manière à contrôler l'emballage du côté alvéole. Bien entendu, il est clair qu'il peut être envisagé d'inspecter tout type d'emballage muni d'au moins une alvéole s'étendant sur l'un ou les deux côtés de l'emballage, l'alvéole étant transparente au moins dans la zone de jonction (soudure **6**) et étant obturée soit par une autre alvéole, soit par un film de fermeture **7**. De même, le convoyeur **12** est conçu de toute manière appropriée pour permettre une inspection optique des emballages **2** du côté alvéole.

Le dispositif d'inspection **1** comporte également au moins une source lumineuse **13** permettant d'éclairer les soudures et dans l'exemple illustré d'éclairer le côté alvéole des emballages. Cette source lumineuse **13** est par exemple réalisée à partir d'une ou plusieurs sources élémentaires de type diodes électroluminescentes, associées ou non à des composants optiques annexes de type diffuseur ou collimateur. Dans l'exemple illustré, la source lumineuse **13** est située du même côté des emballages **2** que la caméra **10**. Selon cet exemple, la source lumineuse **13** et la caméra **10** sont situées du côté alvéole de l'emballage. Bien entendu, il peut être prévu de placer la source lumineuse **13** du côté opposé à la caméra **10** par rapport aux emballages **2**, dans le cas où le film de fermeture **7** est transparent.

Le dispositif d'inspection **1** comporte un système optique frontal **16** de distance focale **Ff** positive, interposé entre l'objectif **11** de la caméra **10** et les emballages **2** de manière que la distance entre le système optique frontal **16** et l'emballage **2** soit strictement inférieur à la distance focale **Ff** du système optique frontal **16**.

Il est à noter que la distance entre l'objectif **11** de la caméra **10** et le système optique frontal **16** est égal sensiblement à la distance focale **Ff** du système optique frontal **16**.

La largeur du système optique frontal **16** couvre au moins toute la largeur **L** de l'emballage **2** à contrôler. Cette largeur de contrôle **L** est prise selon la direction transversale à la direction **X** de déplacement ou de défilement des emballages **2** devant la caméra **10** et englobe ou inclut au moins les soudures **6** à contrôler. Dans l'exemple illustré à la **Fig. 2**, dans lequel l'emballage **2** comporte une seule alvéole **3** entourée d'une soudure **6,** la largeur de contrôle **L** correspond à la largeur de l'emballage prise entre ses deux rebords opposés. Dans l'exemple illustré à la **Fig. 3** dans lequel l'emballage **2** comporte deux alvéoles **3** entourées chacune d'une soudure **6**, la largeur de contrôle **L** correspond à la largeur de l'emballage prise entre les deux rebords extérieurs opposés des deux alvéoles. Bien entendu, la largeur de contrôle **L** peut aussi correspondre à la largeur globale de plusieurs emballages **2** mono ou multi alvéoles placés côte à côte sur le convoyeur **12.**

Avantageusement, l'objectif **11** de la caméra **10** possède une distance focale **F0** qui en combinaison avec la distance focale **Ff** du système optique frontal **16** permet de couvrir la largeur de contrôle **L** par le champ de la caméra **10**.

Selon une variante préférée de réalisation, le système optique frontal **16** comporte au moins une lentille de Fresnel de distance focale positive.

Selon une autre variante de réalisation, le système optique frontal **16** comporte une unique lentille de Fresnel de distance focale positive. Il est à noter que la caméra **10** peut être une caméra linéaire ou une caméra matricielle. Selon une variante préférée de réalisation dans laquelle les emballages **2** défilent selon le sens de déplacement **X** devant le dispositif d'inspection, la caméra **10** est une caméra linéaire orientée selon une direction perpendiculaire à la direction de déplacement **X** des emballages **2**. Selon cette variante préférée de réalisation, le système optique frontal **16** comporte selon la direction de déplacement **X**, une dimension adaptée au format de la caméra à savoir au champ linéaire de la caméra **10**. Le système optique frontal **16** peut ainsi avantageusement présenter selon la direction de déplacement **X**, une dimension réduite par rapport à sa largeur prise dans la direction perpendiculaire à la direction de déplacement **X**. Ainsi, dans le cas où le système optique frontal **16** est réalisé par une lentille de Fresnel, cette dernière peut être tronquée dans sa dimension parallèle à la direction de déplacement **X**.

Comme décrit ci-dessus, l'objet de l'invention vise donc à interposer entre l'objectif **11** de la caméra **10** et les emballages **2**, le système optique frontal **16** de sorte que la distance entre ce système optique frontal **16** et l'emballage **2** soit strictement inférieure à la distance focale **Ff** du système optique frontal **16**. Le procédé consiste à prendre des images des soudures **6** des emballages afin de déceler la présence de défauts dans ces soudures **6**.

Selon une caractéristique préférée de réalisation, la distance entre les emballages **2** et le dispositif **1** est ajustée à l'aide de moyens de réglage par exemple mécaniques du type axe de translation manuel ou motorisé.

Selon une caractéristique avantageuse de réalisation, la source lumineuse **13** possède un spectre centré sur une longueur d'onde qui augmente dans l'image obtenue par la caméra, le contraste d'un intrus potentiel dans les soudures.

Selon une autre caractéristique avantageuse de réalisation, la source lumineuse **13** possède un spectre centré sur une longueur d'onde à laquelle au moins la zone de jonction de l'alvéole **3** est transparente.

Selon une autre caractéristique avantageuse de réalisation, la source lumineuse **13** possède un spectre dans le domaine des infrarouges ou proche infrarouge compris entre 0,78 et 3 µm.

Selon une autre caractéristique avantageuse de réalisation, la source lumineuse **13** possède un spectre étroit de largeur à mi-hauteur inférieure 30 nm.

Dans la mesure où la source lumineuse **13** possède un spectre large, le dispositif **1** comporte avantageusement un filtre basse bande sélectionnant le spectre étroit et interposé entre l'emballage **2** et la caméra **10** ou entre la source lumineuse **13** et l'emballage **2.**

Selon une variante préférée de réalisation, un miroir plan est placé sur le chemin optique entre l'objectif **11** de la caméra **10** et le système optique frontal **16** afin de réduire l'encombrement mécanique de l'ensemble composé du système optique frontal **16**, de l'objectif **11** et de la caméra **10.**

Il est à noter que le dispositif peut comporter un filtre de polarisation de la lumière de la source lumineuse **13** et un analyseur de la lumière polarisée placé entre l'emballage **2** et la caméra **10** et orienté en fonction de la polarisation de la lumière.

Il ressort de la description qui précède que le dispositif **1** permet d'inspecter des soudures **6** d'emballages mono ou multi alvéoles ou plusieurs emballages placés côte à côte, à l'aide d'une unique caméra. Le dispositif d'inspection ne nécessite pas de réglage complexe lors du changement de format des emballages à contrôler.

L'invention n'est pas limitée aux exemples décrits et représentés car diverses modifications peuvent y être apportées sans sortir de son cadre selon les revendications annexées.

## Revendications

1. Procédé pour inspecter sur une largeur de contrôle, des soudures (**6**) d'emballages (**2**), défilant devant un dispositif d'inspection optique (**1**) comportant une caméra (**10**) munie d'un objectif (**11**) et d'au moins une source lumineuse (**13**) d'éclairage des soudures (**6**), **caractérisé en ce qu'**il consiste à interposer un système optique frontal (**16**) de distance focale (**Ff**) positive, couvrant au moins toute la largeur de contrôle (**L**) des emballages, entre l'objectif (**11**) de la caméra (**10**) et les emballages (**2**) de manière que la distance entre ledit système optique frontal (**16**) et l'emballage (**2**) soit strictement inférieure à la distance focale (**Ff**) dudit système optique frontal (**16**), et à prendre des images de soudures afin de déceler la présence de défauts.

2. Procédé d'inspection selon la revendication 1, **caractérisé en ce que** la distance entre l'objectif (**11**) de la caméra (**10**) et le système optique frontal (**16**) est égale sensiblement à la distance focale dudit système optique frontal (**16**).

3. Poste d'inspection sur une largeur de contrôle (**L**) des soudures (**6**) d'emballages (**2**), le poste comportant:
- un convoyer (**12**) assurant l'amenée des emballages (**2**) successivement audit poste,
- les emballages (**2**) placés temporairement à ce poste d'inspection, un dispositif d'inspection optique (**1**) comportant au moins une source lumineuse (**13**) permettant d'éclairer les emballages (**2**) acheminés à l'aide d'un convoyeur (**12**), ce dispositif comportant également, une caméra (**10**) munie d'un objectif (**11**), **caractérisé en ce qu'**il comporte un système optique frontal (**16**) de distance focale (**Ff**) positive couvrant au moins toute la largeur de contrôle (**L**) des soudures (**6**) des emballages (**2**), ce système optique frontal (**16**) étant interposé entre l'objectif (**11**) de la caméra (**10**) et les emballages (**2**) de manière que la distance entre ledit système optique frontal (**16**) et l'emballage (**2**) soit strictement inférieure à la distance focale (**Ff**) dudit système optique frontal (**16**).

4. Poste d'inspection selon la revendication 3, **caractérisé en ce que** le système optique frontal (**16**) comporte au moins une ou une unique lentille de Fresnel de distance focale positive.

5. Poste d'inspection selon la revendication 3 ou 4, **caractérisé en ce que** l'objectif (**11**) de la caméra (**10**) possède une distance focale Fo qui, en combinaison avec la distance focale Ff du système optique frontal (**16**), permet de couvrir la largeur de contrôle (**L**) par le champ de la caméra (**10**).

6. Poste d'inspection selon la revendication 5, **caractérisé en ce que** la caméra (**10**) est une caméra linéaire orientée selon la largeur de contrôle (**L**) et **en ce que** le système optique frontal (**16**) comporte selon une direction perpendiculaire à la largeur de contrôle (**L**), une dimension adaptée au champ de la caméra linéaire.

7. Poste selon au moins l'une des revendications 3 à 6, **caractérisé en ce que** la source lumineuse (**13**) est située du même coté des emballages (**2**) que la caméra (**10**) ou du côté opposé à la caméra (**10**) par rapport aux emballages (**2**):

8. Poste d'inspection selon la revendication 3, **caractérisé en ce que** la source lumineuse (**13**) possède un spectre centré sur une longueur d'onde qui augmente dans l'image obtenue par la caméra, le contraste d'un intrus potentiel dans les soudures.

9. Poste d'inspection selon la revendication 3, **caractérisé en ce que** la source lumineuse (**13**) possède un spectre centré sur une longueur d'onde à laquelle les emballages (**2**) sont transparents.

10. Poste d'inspection selon la revendication 3, **caractérisé en ce que** la source lumineuse (**13**) possède un spectre dans le domaine des infrarouges ou proche infrarouge compris entre 0,78 et 3 µm.

11. Poste d'inspection selon l'une des revendications 8 à 10, **caractérisé en ce que** la source lumineuse (**13**) possède un spectre étroit de largeur à mi-hauteur inférieure à 30 nm.

12. Poste d'inspection selon la revendication 11, **caractérisé en ce que** la source lumineuse (**13**) présente un spectre large, un filtre basse bande sélectionnant le spectre étroit étant interposé entre l'emballage (**2**) et la caméra (**10**) ou entre la source lumineuse (**13**) et l'emballage (**2**).

13. Poste d'inspection selon la revendication 3, **caractérisé en ce qu'**il comporte sur le chemin optique situé entre l'objectif (**11**) de la caméra (**10**) et le système optique frontal (**16**), un miroir plan.

14. Poste d'inspection selon la revendication **3**, caractérisé en ce qui) comporte d'une part un filtre de polarisation de la lumière de la source lumineuse (**13**) et, d'autre part un analyseur de la lumière polarisée placé entre l'emballage (**2**) et la caméra (**10**) et orienté en fonction de la polarisation de la lumière.

15. Poste d'inspection selon la revendication 3, **caractérisée en ce que** le dispositif d'inspection (**1**) comporte une largeur de contrôle (**L**) correspondant à une largeur du convoyeur (**12**) adaptée pour recevoir côte à côte, une série d'emballages à contrôler, le dispositif d'inspection (**1**) comportant une unique caméra (**10**) d'inspection des emballages (**2**) occupant la largeur de contrôle (**L**).

16. Poste d'inspection selon la revendication **3**, **caractérisée en ce qu'**il comporte des moyens de réglage de la distance entre les emballages (**2**) et le dispositif d'inspection (**1**).

## Patentansprüche

1. Verfahren zur Kontrolle der Schweißnähte (6) von Verpackungen (2), die vor einer optischen Kontrollvorrichtung (1) vorbeilaufen, auf einer Kontrollbreite, umfassend eine Kamera (10), die mit einem Objektiv (11) und mindestens einer Lichtquelle (13) zur Beleuchtung der Schweißnähte (6) versehen ist, **dadurch gekennzeichnet, dass** es darin besteht, ein frontales optisches System (16) mit einer positiven Brennweite (Ff), das mindestens die gesamte Kontrollbreite (L) der Verpackungen abdeckt, zwischen dem Objektiv (11) der Kamera (10) und den Verpackungen (2) anzuordnen, so dass der Abstand zwischen dem frontalen optischen System (16) und der Verpackung (2) unbedingt geringer als die Brennweite (Ff) des frontalen optischen Systems (16) ist, und Bilder von Schweißnähten aufzunehmen, um das Vorhandensein von Fehlern zu erfassen.

2. Kontrollverfahren nach Anspruch 1, **dadurch gekennzeichnet, dass** der Abstand zwischen dem Objektiv (11) der Kamera (10) und dem frontalen optischen System (16) im Wesentlichen gleich der Brennweite des frontalen optischen Systems (16) ist.

3. Station zur Kontrolle der Schweißnähte (6) von Verpackungen (2) auf einer Kontrollbreite (L), wobei die Station umfasst:
- einen Förderer (12), der die aufeinanderfolgende Zuführung der Verpackungen (2) zur Station gewährleistet,
- die Verpackungen (2), die vorübergehend in dieser Kontrollstation angeordnet sind,
- eine optische Kontrollvorrichtung (1), umfassend mindestens eine Lichtquelle (13), die es ermöglicht, die mit Hilfe eines Förderers (12) zugeführten Verpackungen (2) zu beleuchten, wobei diese Vorrichtung auch eine mit einem Objektiv (11) versehene Kamera (10) umfasst,
**dadurch gekennzeichnet, dass** sie ein frontales optisches System (16) mit einer positiven Brennweite (Ff) umfasst, das mindestens die gesamte Kontrollbreite (L) der Schweißnähte (6) der Verpackungen (2) abdeckt, wobei dieses frontale optische System (16) zwischen dem Objektiv (11) der Kamera (10) und den Verpackungen (2) angeordnet ist, so dass der Abstand zwischen dem frontalen optischen System (16) und der Verpackung (2) unbedingt geringer als die Brennweite (Ff) des frontalen optischen Systems (16) ist.

4. Kontrollstation nach Anspruch 3, **dadurch gekennzeichnet, dass** das frontale optische System (16) mindestens eine oder eine einzige Fresnel-Linse mit einer positiven Brennweite umfasst.

5. Kontrollstation nach Anspruch 3 oder 4, **dadurch gekennzeichnet, dass** das Objektiv (11) der Kamera (10) eine Brennweite Fo besitzt, die es in Kombination mit der Brennweite Ff des frontalen optischen Systems (16) ermöglicht, die Kontrollbreite (L) mit dem Feld der Kamera (10) abzudecken.

6. Kontrollstation nach Anspruch 5, **dadurch gekennzeichnet, dass** die Kamera (10) eine lineare Kamera ist, die in Richtung der Kontrollbreite (L) ausgerichtet ist, und dass das frontale optische System (16) in eine Richtung senkrecht auf die Kontrollbreite (L) eine an das Feld der linearen Kamera angepasste Dimension umfasst.

7. Station nach mindestens einem der Ansprüche 3 bis 6, **dadurch gekennzeichnet, dass** sich die Lichtquelle (13) auf derselben Seite der Verpackungen (2) wie die Kamera (10) oder der der Kamera (10) gegenüberliegenden Seite in Bezug zu den Verpackungen (2) befindet.

8. Kontrollstation nach Anspruch 3, **dadurch gekennzeichnet, dass** die Lichtquelle (13) ein Spektrum besitzt, das auf eine Wellenlänge zentriert ist, die in dem von der Kamera erhaltenen Bild den Kontrast eines potentiellen Einschlusses in den Schweißnähten erhöht.

9. Kontrollstation nach Anspruch 3, **dadurch gekennzeichnet, dass** die Lichtquelle (13) ein Spektrum besitzt, das auf eine Wellenlänge zentriert ist, bei der die Verpackungen (2) transparent sind.

10. Kontrollstation nach Anspruch 3, **dadurch gekennzeichnet, dass** die Lichtquelle (13) ein Spektrum im Bereich des Infrarots oder des nahen Infrarots zwischen 0,78 und 3 µm besitzt.

11. Kontrollstation nach einem der Ansprüche 8 bis 10, **dadurch gekennzeichnet, dass** die Lichtquelle (13) ein schmales Spektrum mit einer Breite auf halbe Höhe unter 30 nm besitzt.

12. Kontrollstation nach Anspruch 11, **dadurch gekennzeichnet, dass** die Lichtquelle (13) ein breites Spektrum aufweist, wobei ein Bandfilter, das das schmale Spektrum auswählt, zwischen der Verpackung (2) und der Kamera (10) oder zwischen der Lichtquelle (13) und der Verpackung (2) angeordnet ist.

13. Kontrollstation nach Anspruch 3, **dadurch gekennzeichnet, dass** sie auf dem optischen Weg, der sich zwischen dem Objektiv (11) der Kamera (10) und dem frontalen optischen System (16) befindet, einen flachen Spiegel umfasst.

14. Kontrollstation nach Anspruch 3, **dadurch gekennzeichnet, dass** sie einerseits ein Polarisationsfilter des Lichts der Lichtquelle (13) und andererseits einen Analysator des polarisierten Lichts umfasst, der sich zwischen der Verpackung (2) und der Kamera (10) befindet und in Abhängigkeit von der Polarisation des Lichts ausgerichtet ist.

15. Kontrollstation nach Anspruch 3, **dadurch gekennzeichnet, dass** die Kontrollvorrichtung (1) eine Kontrollbreite (L) umfasst, entsprechend einer Breite des Förderers (12), die dazu vorgesehen ist, Seite an Seite eine Reihe von zu kontrollierenden Verpackungen aufzunehmen, wobei die Kontrollvorrichtung (1) eine einzige Kamera (10) zur Kontrolle der Verpackungen (2), die die Kontrollbreite (L) einnehmen, umfasst.

16. Kontrollstation nach Anspruch 3, **dadurch gekennzeichnet, dass** sie Mittel zur Einstellung des Abstandes zwischen den Verpackungen (2) und der Kontrollvorrichtung (1) umfasst.

## Claims

1. An inspection method of inspecting welds (6) of packages (2) across an inspection width, the packages (2) moving past an optical inspection device (1) including a camera (10) having an objective lens (11) and at least one light source (13) for illuminating the welds (6), the method being **characterized in that** it consists in interposing, between the lens (11) of the camera (10) and the packages (2), a frontal optical system (16) of positive focal length (Ff) covering at least the entire inspection width (L) of the packages so that the distance between said frontal optical system (16) and the package (2) is strictly less than the focal length (Ff) of said frontal optical system (16), and in taking weld images in order to detect the presence of defects.

2. An inspection method according to claim 1, **characterized in that** the distance between the lens (11) of the camera (10) and the frontal optical system (16) is substantially equal to the focal length of said frontal optical system (16).

3. An inspection station for inspecting welds (6) of packages (2) over an inspection width (L), the station comprising:
a conveyor (12) bringing packages (2) successively to said station;
packages (2) placed temporarily at the inspection station;
an optical inspection device (1) comprising at least one light source (13) enabling the packages (2) brought by a conveyor (12) to be illuminated, the device also including a camera (10) having an objective lens (11), the device being **characterized in that** it includes a frontal optical system (16) of positive focal length (Ff) covering at least the entire inspection width (L) of the welds (6) of packages (2), the frontal optical system (16) being interposed between the lens (11) of the camera (10) and the packages (2) in such a manner that the distance between said frontal optical system (16) and the package (2) is strictly less than the focal length (Ff) of said frontal optical system (16).

4. An inspection station according to claim 3, **characterized in that** the frontal optical system (16) comprises at least one or a single Fresnel lens of positive focal length.

5. An inspection station according to claim 3 or claim 4, **characterized in that** the lens (11) of the camera (10) possesses a focal length Fo that, in combination with the focal length Ff of the frontal optical system (16), serves to cover the inspection width (L) by the field of the camera (10).

6. An inspection station according to claim 5, **characterized in that** the camera (10) is a linear camera oriented along the inspection width (L), and **in that** the frontal optical system (16) has a dimension in a direction perpendicular to the inspection width (L) that is matched to the field of the linear camera.

7. A station according to any one of claims 3 to 6, **characterized in that** the light source (13) is situated on the same side of the packages (2) as the camera (10) or on the opposite side of the packages (2), i.e. the side facing away from the camera (10).

8. An inspection station according to claim 3, **characterized in that** the light source (13) possesses a spectrum centered on a wavelength that serves, in the image obtained by the camera, to increase the contrast of a potential intrusion in the welds.

9. An inspection station according to claim 3, **characterized in that** the light source (13) possesses a spectrum centered on a wavelength at which the packages (2) are transparent.

10. An inspection station according to claim 3, **characterized in that** the light source (13) possesses a spectrum in the infrared or near infrared range from 0.78 µm to 3 µm.

11. An inspection station according to any one of claims 8 to 10, **characterized in that** the light source (13) possesses a narrow spectrum with a half-height width of less than 30 nm.

12. An inspection station according to claim 11, **characterized in that** the light source (13) presents a broad spectrum, a bandpass filter selecting the narrow spectrum being interposed between the package (2) and the camera (10), or between the light source (13) and the package (2).

13. An inspection station according to claim 3, **characterized in that** it includes a plane mirror on the light path situated between the lens (11) of the camera (10) and the frontal optical system (16).

14. An inspection station according to claim 3, **characterized in that** it includes firstly a filter for polarizing the light from the light source (13) and secondly an analyzer for analyzing polarized light placed between the package (2) and the camera (10) and oriented as a function of the polarization of the light.

15. An inspection station according to claim 3, **characterized in that** the inspection device (1) has an inspection width (L) corresponding to a width of the conveyor (12) suitable for receiving a series of packages for inspection side by side, the inspection device (1) having a single camera (10) for inspecting the packages (2) and occupying the inspection width (L).

16. An inspection station according to claim 3, **characterized in that** it includes means for adjusting the distance between the packages (2) and the inspection device (1).
